# DEMANDE DE BREVET EUROPEEN

(11) **EP 4 287 377 A1**
(43) Date de publication de la demande: **06.12.2023**
(21) Numéro de dépôt: 23168814.4
(22) Date de dépôt: 19.04.2023
(51) Int. Cl.: H01M 50/213, H01M 50/291, H01M 50/296, H01M 50/503, H01M 50/514

(54) **PACK-BATTERIE À MODULES D ACCUMULATEURS LOGÉS INDIVIDUELLEMENT DANS DES ENVELOPPES ÉTANCHES, À TENUE MÉCANIQUE EN CAS DE SURPRESSION ET EMPILÉES LES UNES SUR LES AUTRES EN CONNECTANT ÉLECTRIQUEMENT LES MODULES ENTRE EUX**

(30) Priorité: 26.04.2022 FR 2203907
(71) Demandeur: Commissariat à l'énergie atomique et aux énergies alternatives, 75015 Paris (FR)
(72) Inventeur: MASSON, Olivier, 38054 GRENOBLE (FR)
(74) Mandataire: Cabinet Nony

(57) **Abrégé**

Pack-batterie à modules d'accumulateurs logés individuellement dans des enveloppes étanches, à tenue mécanique en cas de surpression et empilées les unes sur les autres en connectant électriquement les modules entre eux.

L'invention consiste essentiellement en un pack-batterie modulaire réalisé par empilement de modules, de préférence identiques, chaque carter de module pouvant loger plusieurs accumulateurs maintenus dans un support, la connexion électrique entre les modules adjacentes étant réalisée, de préférence selon l'axe central, à chaque extrémité longitudinale des carters.

## Description

### Domaine technique

La présente invention concerne le domaine des batteries ou accumulateurs métal-ion ou autres chimies (plomb...).

Plus particulièrement, il peut s'agir de générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un moyen d'améliorer l'assemblage, le poids et la sécurité d'un pack-batterie à pluralité de batteries ou accumulateurs électrochimiques au métal-ion, notamment à des fins d'utilisation dans le domaine aéronautique.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

### Technique antérieure

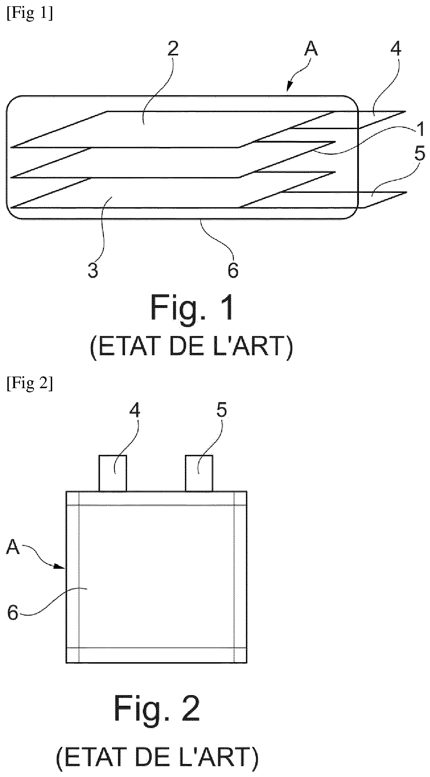

Telle qu'illustrée schématiquement en figures 1 et 2, une batterie ou accumulateur lithium-ion comporte usuellement au moins une cellule électrochimique C constituée d'un séparateur imprégné d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

Plusieurs types de géométrie d'architecture d'accumulateur sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoC₂, LiNi_{0.33}Mn_{0.33}Co_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier, généralement en métal, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

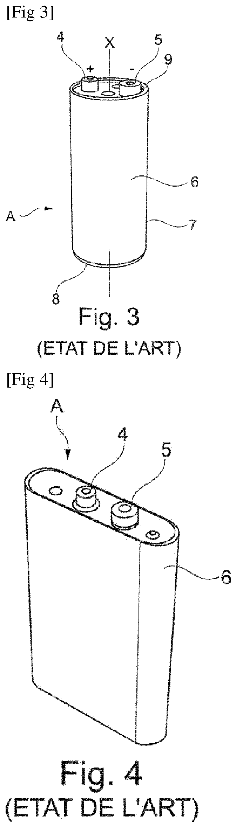

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne positive 4 est soudée sur le couvercle 9 tandis que l'autre borne de sortie, par exemple la borne négative 5, passe à travers le couvercle 9 avec interposition d'un joint non représenté qui isole électriquement la borne négative 5 du couvercle.

Le type de boitier rigide largement fabriqué consiste également en un godet embouti et un couvercle, soudés entre eux sur leur périphérie par laser. En revanche, les collecteurs de courant comprennent une traversée avec une partie faisant saillie sur le dessus du boitier et qui forme une borne aussi appelée pôle apparent de la batterie.

Un pack batterie est constitué d'un nombre variable d'accumulateurs pouvant atteindre plusieurs milliers qui sont reliés électriquement en série ou en parallèle entre eux et généralement par des barres ou pistes de connexion mécanique et électrique, appelées usuellement, busbars.

D'une manière générale, plusieurs architectures électriques peuvent être définies au sein d'un pack-batterie P. Ainsi, des accumulateurs peuvent être reliés entre eux en parallèle, c'est-à-dire avec toutes les bornes positives reliées entre elles et toutes les bornes négatives également reliées entre elles. Ces liaisons forment une branche qui peut être reliée en série à une autre branche. On peut aussi avoir des accumulateurs reliés entre eux en série, c'est-à-dire que les bornes positives sont reliées aux bornes négatives. Ces liaisons forment une branche qui peut être reliée en parallèle à une autre branche.

Quelle que soit l'architecture, chaque branche en série ou en parallèle peut comporter généralement de deux à des dizaines d'accumulateurs.

Les accumulateurs des packs batterie actuels sont généralement assemblés sur un ou plusieurs busbars par soudage, vissage ou frettage.

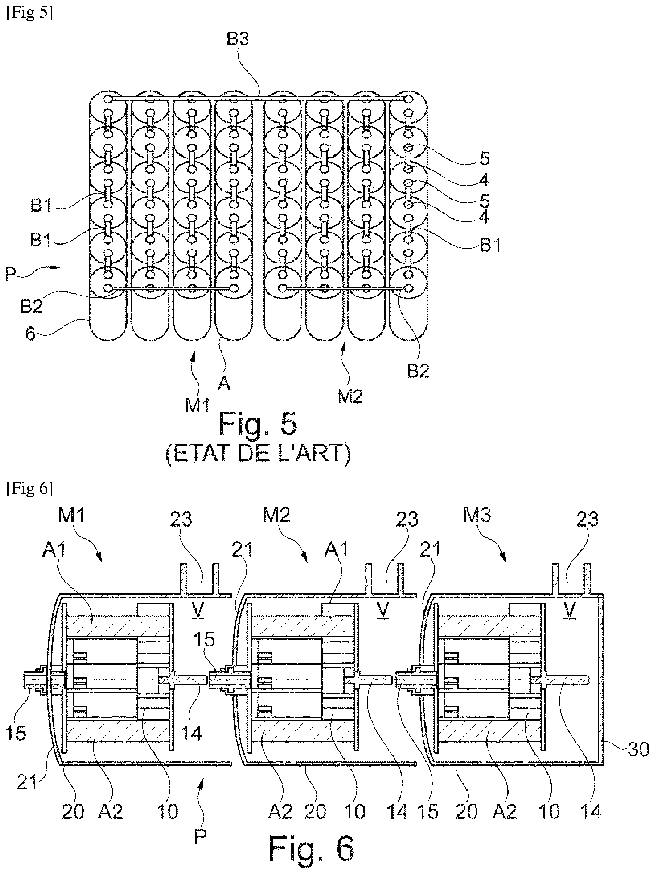

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Un tel assemblage est relativement long avec des coûts de production relativement élevés.

En outre, les accumulateurs sous tension qui doivent être manipulés nécessitent l'obtention pour les opérateurs d'habilitations contraignantes, de type TST (acronyme de Travail Sous Tension).

Dans le développement et la fabrication des batteries lithium-ion, pour chaque profil de charge/décharge spécifique à chaque nouvelle demande, quels que soient les acteurs du marché, cela nécessite des dimensionnements précis (architectures électriques série/parallèle, mécaniques, thermiques...) pour concevoir de manière optimale un pack-batterie performant et sécuritaire.

Un système électrochimique lithium, que ce soit à l'échelle cellule, module ou pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur doit contrôler sa température, typiquement généralement inférieure à 70°C à sa surface extérieure de boitier, afin d'éviter de partir en emballement thermique qui peut être suivi d'une génération de gaz et d'explosion et/ou feu. Un emballement thermique est typiquement la conséquence d'un défaut interne d'un accumulateur, ou d'un usage sortant notablement des conditions normales d'opération (ex. court-circuit externe, exposition thermique à l'emballement d'une cellule voisine...).

Également, le maintien d'une température inférieure à 70°C permet d'augmenter sa durée de vie, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion à hautes énergies, typiquement supérieure à 1kW.h, plusieurs accumulateurs sont mis en série pour obtenir le niveau de tension requis et mis en parallèle pour obtenir le courant à fournir. La mise en série/parallèle peut se faire au niveau des accumulateurs, des modules avec une grande variété de topologies de câblage.

La mise en série ou parallèle d'accumulateurs plus ou moins différents peut avoir des conséquences sur les performances et durabilité résultantes pour le pack.

De manière générale, une défaillance d'un accumulateur dans un pack batterie peut avoir plusieurs impacts :
- le dégagement, d'une part, de l'énergie stockée dans l'accumulateur en défaut et, d'autre part, de l'énergie d'autres accumulateurs du pack. Selon la topologie choisie pour le pack, l'énergie apportée par les autres accumulateurs du pack peut amener un risque de feu ou d'explosion qui n'existait pas sur l'accumulateur seul ;
- des réactions électrochimiques au coeur des accumulateurs peuvent conduire à la destruction des accumulateurs unitaires et provoquer une propagation d'un défaut interne à l'accumulateur (généralement un court-circuit interne) conduisant à l'explosion du pack. L'énergie de dégradation des composants internes peut ainsi être élevée. Dans ce cas, il est également nécessaire d'avoir recours à un système de pilotage (BMS) afin de protéger les autres accumulateurs du pack ;
- le pack complet ne peut plus être utilisé pour l'application ou être en mode dégradé (énergie plus faible par exemple). Ainsi, si un défaut d'un accumulateur dans un pack est constaté, il est important de l'isoler rapidement, le rendre inerte, et assurer une continuité de service du pack restant. Par exemple, une batterie lithium ion d'APU intégré dans un aéronef ne doit pas perturber le fonctionnement dudit aéronef et assurer une sécurité optimale pendant le vol.

En plus de ces contraintes de sécurité de fonctionnement, les pack-batteries sont soumis à des contraintes d'encombrement de plus en plus fortes, tandis qu'est souvent également recherchée une facilité d'assemblage/désassemblage. Ainsi, lorsque le pack batterie est destiné à un application embarquée, i.e. dans un objet sujet à des déplacements, il peut être nécessaire d'assurer sa maintenance et/ou sa réparation en des lieux ne disposant pas d'un outillage spécialisé.

Il est connu d'empiler des boitiers d'accumulateurs ou des boitiers de modules de batterie.

Ainsi, la demande de brevet WO2019/092070 A1 divulgue un boitier d'accumulateurs de géométrie cylindrique, de forme générale parallélépipédique qui peut être empilé avec d'autres boitiers identiques en mettant en contact directement une borne positive d'un accumulateur avec celle négative d'un accumulateur d'un boitier adjacent.

Le brevet CN102447081B divulgue un empilement similaire. Aucune des configurations divulguée ne permet cependant de gérer la sécurité du pack en contenant une surpression de gaz générée au cours de fonctionnement anormal/accidentel, typiquement en cas d'emballement thermique, d'au moins un accumulateur.

Le brevet EP2403031B1 divulgue un module unitaire à l'intérieur duquel des accumulateurs sont agencés côte-à-côte mis en série électrique et assemblés mécaniquement, le module étant conçu pour contenir les gaz.

La demande WO2016/202556 A1 divulgue un ensemble d'accumulateurs empilés les uns sur les autres lors de la fabrication dans une enveloppe unique étanche au gaz.

Les inventeurs de la présente invention ont été confrontés à un cahier des charges d'un pack-batterie destiné au milieu aéronautique, auquel aucune solution de l'art antérieur ne peut répondre.

Les principales contraintes de ce cahier des charges peuvent être énoncées comme suit :
- un pack-batterie qui soit sous une forme modulaire avec au moins deux configurations électriques possibles des modules le constituant ;
- la possibilité de passer d'une configuration à l'autre et/ou de substitution des modules entre eux pour des questions de maintenance sur un moyen de transport comportant au moins deux packs batteries : un pack-batterie est nécessaire pour des fonctions de sécurité lors d'un vol d'un aéronef, tandis que l'autre n'apporte que des fonctions non-strictement nécessaires ou uniquement avant un vol. En cas de panne sur l'un des pack-batterie, il doit être possible de démonter le pack en état de marche pour réparer le pack défaillant, et ce en un temps relativement rapide ;
- la garantie d'un bon maintien mécanique des modules d'un pack entre eux mais avec un démontage facile et utilisant des outils standards ;
- une étanchéité aux gaz/fumées/fuites de liquide selon les normes du domaine ;
- une résistance mécanique suffisante pour qu'en cas d'emballement thermique d'au moins un ou deux accumulateurs, l'enveloppe qui contient ce(s) accumulateur(s) résiste. En effet, lors d'un emballement thermique un accumulateur crée un volume important de gaz, typiquement de l'ordre de quelques dizaines de litres à atmosphère normale, en quelques dixièmes de seconde. Cela peut générer un pic important de pression, si le volume d'air dans lequel dégaze l'accumulateur est petit et que l'orifice d'évacuation est petit, car de ce fait un écoulement important du gaz brusque ne peut se faire ;
- une résistance au feu car la génération de pression est souvent accompagnée de feu, qui s'apparente en général à une faible explosion ;
- la plus grande légèreté possible ;
- un pack-batterie comprenant le moins de composants possible pour éviter les risques lors de son montage ;
- la présence de sorties pour connecter des tuyaux pour récolter les gaz susceptibles d'être largués par les accumulateurs.

Il existe donc un besoin pour améliorer les pack-batteries, plus particulièrement ceux destinés au domaine aéronautique ou d'autres domaines, notamment afin de répondre au cahier des charges précité., i.e. nécessitant un niveau de sécurité très élevé, et le cas échéant des besoins spécifiques de démontabilité/maintenance.

Le but de l'invention est de répondre au moins en partie à ce(s) besoin(s).

### Exposé de l'invention

Pour ce faire, l'invention concerne, sous l'un de ses aspects, un pack-batterie comprenant une pluralité de modules comprenant chacun au moins un accumulateur électrochimique, au moins un support de maintien de(s) l'accumulateur, une enveloppe formant un carter dans lequel est logé le support et le(s) accumulateur(s) maintenu(s) dans le support, au moins un premier connecteur électrique et au moins un deuxième connecteur électrique complémentaire au premier connecteur, les premier et deuxième connecteurs électriques étant reliés électriquement respectivement à une borne de sortie d'une polarité de l'(des) accumulateur(s) et à la borne de sortie de l'autre polarité de l'(des) accumulateur(s), le premier connecteur électrique étant monté en traversée électrique à travers une paroi d'extrémité longitudinale du carter qui est de forme bombée, munie ou non de nervures de rigidification;
pack-batterie dans lequel les carters des modules sont empilés les uns sur les autres en étant assemblés de sorte que deux carters adjacents sont séparés par la paroi d'extrémité longitudinale de l'un d'entre eux dans laquelle la traversée électrique est montée, que l'une des extrémités longitudinales de l'empilement soit délimitée par la paroi d'un carter à travers de laquelle la traversée électrique est montée tandis que l'autre extrémité longitudinale de l'empilement est fermée par un couvercle, et que le(s) accumulateur(s) de deux modules adjacents soient reliés électriquement par le premier connecteur électrique d'un deux modules adjacents connecté électriquement au deuxième connecteur électrique de l'autre des deux modules adjacents.

Selon un mode de réalisation avantageux, chaque module comprend une pluralité d'accumulateurs, de préférence de format cylindrique, maintenus dans le support en s'étendant parallèlement à l'axe longitudinal (X) de l'empilement et reliés électriquement en série et/ou en parallèle par leurs bornes de sortie au moyen de pistes de connexion électrique formant des busbars.

Selon une variante de réalisation avantageuse, le carter de chaque module ainsi que le couvercle sont en polymère isolant électrique, le premier connecteur électrique étant monté directement dans la paroi d'extrémité longitudinale du carter.

De préférence, le polymère isolant électrique est choisi parmi le polyétheréthercétone cétone (PEKK), le polyétheréthercétone (PEEK), le polyfluorure de vinylidène (PVDF), le polysulfure de phénylène (PPS), le polyamide 11 (PA11), le polyamide 12 (PA12), le polyétherimide (PEI), également appelé ULTEM, le polyphénylsulfone (PPSU), le polysulfone (PSU), le polyéthersulfone (PES). D'autres polymères dits à haute performance ou ultra performance peuvent être envisagés dans le cadre de l'invention.

Selon un mode de réalisation avantageux, le carter de chaque module est sous la forme générale d'un cylindre borgne à l'exception du fond percé d'au moins un trou débouchant dans lequel la traversée électrique est réalisée.

Avantageusement, le trou débouchant pour la traversée électrique est réalisé selon l'axe central du cylindre qui constitue l'axe longitudinal d'empilement. Cela permet d'avoir une connexion électrique axiale et une possible orientation à volonté des modules.

De préférence, la forme de la paroi d'extrémité longitudinale de chacun des carters est bombée vers l'extérieur du carter qui l'intègre ou auquel elle est solidarisée.

Avec une carter de forme générale cylindrique, le fond du carter est une portion hémisphérique concave ou convexe.

Une forme bombée permet d'alléger le poids du carter et d'améliorer sa tenue en pression. En outre, elle permet d'avoir moins de matière que si la surface était plate ou même nervurée et d'avoir plus de place pour connecter des tuyaux dont la fonction est de collecter les gaz susceptibles d'être relargués par les accumulateurs.

Le fait que la paroi soit bombée permet aussi une meilleure tenue en pression des deux côtés de la paroi et ainsi de limiter le déplacement du point de connexion électrique entre le premier connecteur électrique et le deuxième connecteur du carter adjacent, en cas de surpression. Ainsi, moyennant une connexion électrique acceptant un faible déplacement sans déconnexion, on supprime le risque des déconnexions électriques et les arcs électriques induits.

Selon une variante de réalisation avantageuse, chaque carter de module comprend, à chacune de ses extrémités longitudinales, un flasque de serrage, un collier de serrage, en tant que moyen d'assemblage mécanique, étant rapporté et fixé autour des flasques de serrage de deux carters adjacents ou du carter d'extrémité et du couvercle.

Avantageusement, les premier et deuxième connecteur électriques sont configurés pour autoriser un déplacement axial, de préférence entre 2 et 7mm, entre les modules sans déconnexion électrique

Selon une autre variante de réalisation avantageuse, les premier et deuxième connecteur électriques sont de type fiche mâle/femelle, appelé « banane », de préférence à multi-contacts périphériques. Il peut s'agir de connecteurs « banane » déjà présents dans le commerce, comme ceux référencés sous https://www.staubli.com/ch/fr/electrical-connectors/produits/multilam-products-and-technology/multilam-lineo.html ou sous https://www.famell.com/datasheets/96333.pdf .

De préférence, chaque carter de module est percé d'un ou plusieurs trous débouchant adapté(s) pour évacuer les gaz en cas de surpression générée au cours de fonctionnement anormal/accidentel, typiquement en cas d'emballement thermique, d'au moins un accumulateur logé dans ledit carter.

On précise ici que pour le phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min. Typiquement, en cas d'emballement thermique, il y a une phase de dégazage de l'accumulateur par rupture de son évent. Cette phase de dégazage génère une surpression temporaire dans l'enveloppe du module concerné, le temps que le gaz évacué de l'accumulateur soit évacué par les trous débouchant prévus à cet effet au travers de l'enveloppe. Dans un environnement avec des contraintes moins spécifiques d'évacuation, une partie du gaz pourrait également être évacuée au niveau des assemblages entre les enveloppes des modules, qui ne seraient donc pas complètement étanches.

De préférence encore, chaque carter de module est percé d'un trou débouchant adapté pour loger un connecteur électrique relié électriquement à l'(aux) accumulateur(s) logé(s) dans le carter et à relier électriquement à un système de management de batterie (BMS).

On rappelle ici que le BMS (acronyme anglais de « Battery Management System ») est utilisé afin de protéger les éléments de facteurs augmentant leur dangerosité, tel des courants trop élevés, des potentiels non adaptés (trop élevés ou trop faibles), des températures limites. Le BMS stoppe donc les applications de courant (charge, décharge) dès l'atteinte de tensions seuils.

Avantageusement, au moins une partie du volume entre le support à l'intérieur d'un carter et la paroi de séparation avec le carter adjacent est remplie d'un isolant thermique, de préférence sous la forme d'une mousse. Un tel isolant permet d'interrompre à tout le moins orienter le flux thermique qui se dégage des accumulateurs, notamment en cas de fonctionnement anormal.

Chaque accumulateur peut comprendre en tant qu'emballage un boitier ou un emballage souple.

L'invention a également pour objet un procédé de réalisation d'un pack-batterie comprenant les étapes suivantes :
a/ fourniture d'une pluralité de modules comprenant chacun au moins un accumulateur électrochimique, au moins un support de maintien de(s) l'accumulateur, une enveloppe formant un carter dans lequel est logé le support et le(s) accumulateur(s) maintenu(s) dans le support, au moins un premier connecteur électrique et au moins un deuxième connecteur électrique complémentaire au premier connecteur, les premier et deuxième connecteurs électriques étant reliés électriquement respectivement à une borne de sortie d'une polarité de l'(des) accumulateur(s) et à la borne de sortie de l'autre polarité de l'(des) accumulateur(s), le premier connecteur électrique étant monté en traversée électrique à travers une paroi d'extrémité longitudinale du carter ;
b/ empilement des carters des modules les uns sur les autres de sorte que deux carters adjacents sont séparés uniquement par la paroi d'extrémité longitudinale de l'un d'entre eux dans laquelle la traversée électrique est montée, que l'une des extrémités longitudinales de l'empilement soit délimitée par la paroi d'un carter à travers de laquelle la traversée électrique est montée, et que le(s) accumulateur(s) de deux modules adjacents soient reliés électriquement par le premier connecteur électrique d'un deux modules adjacents connecté électriquement au deuxième connecteur électrique de l'autre des deux modules adjacents ;
c/ fermeture de l'autre extrémité longitudinale de l'empilement par un couvercle ;
d/ assemblage mécanique des carters des modules empilés entre eux et avec le couvercle. Pour une application à un pack-batterie Li-ion, chaque accumulateur est un accumulateur Li-ion dans lequel :
   - le matériau d'électrode(s) négative(s) est choisi dans le groupe comportant le graphite, le lithium, l'oxyde de titanate Li₄TiO₅O_{12 ;}
   - le matériau d'électrode(s) positive(s) est choisi dans le groupe comportant LiFePO₄, LiCoO₂, LiNi_{0.33}Mn_{0.33}Co_{0.33}O₂.

Ainsi, l'invention consiste essentiellement en un pack-batterie modulaire réalisé par empilement de modules, de préférence identiques, chaque carter de module pouvant loger plusieurs accumulateurs maintenus dans un support, la connexion électrique entre les modules adjacentes étant réalisée, de préférence selon l'axe central, à chaque extrémité longitudinale des carters.

Le montage est simple et rapide car la réalisation d'un module unitaire consiste en la mise en place d'un support dans lequel sont maintenus les accumulateurs et les connecteurs électriques dans un carter. Puis, le montage du pack-batterie est réalisé en empilant les carters les uns sur les autres, ce qui les connecte électriquement, automatiquement.

Pour alléger le pack-batterie, les parois intermédiaires entre les carters sont communes et sont intégrées ou solidaires à un des deux modules qu'elles séparent. Ainsi les carters des modules sont en quelque sorte des boitiers globalement borgnes à l'exception de la traversée électrique, du passage de la connectique BMS, du ou des passages de gaz.

Pour alléger encore le pack et améliorer la tenue en pression des modules unitaires, ces parois intermédiaires sont bombées toutes dans un même sens, concave ou convexe, ce qui permet d'avoir moins de matière que dans le cas où ces parois sont plates et d'avoir plus de place pour connecter des tuyaux de collecte des gaz.

En outre, le fait d'avoir des parois intermédiaires de forme bombée permet une meilleure tenue en pression des deux côtés desdites parois et ainsi de limiter le déplacement du point de connexion électrique en cas de surpression, et par-là d'éviter les déconnexions électriques et les arcs électriques induits.

Les avantages d'un pack-batterie selon l'invention comparativement aux pack-batteries selon l'état de l'art sont nombreux parmi lesquels on peut citer :
- une modularité à souhait permettant de passer d'une configuration à une autre très facilement et rapidement, ce qui est avantageux notamment en cas de défaillance d'un ou plusieurs accumulateurs ;
- un pack-batterie léger, facile et rapide à assembler/désassembler ;
- une résistance mécanique et au feu de chaque module qui permet de résister aux conditions d'un fonctionnement anormal, notamment en cas d'emballement thermique d'un ou plusieurs accumulateurs qu'il contient et ce sans aucune contagion aux autres modules du pack ni à l'environnement externe.

Un pack-batterie selon l'invention est donc parfaitement adapté aux applications embarquées, plus particulièrement du domaine aéronautique, notamment dans les avions civils ou militaires.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en en perspective d'un accumulateur lithium-ion selon l'état de l'art avec son emballage rigide constitué d'un boitier de forme prismatique.
[Fig 5] la figure 5 est une vue en perspective d'un assemblage au moyen de busbars d'accumulateurs lithium-ion selon l'état de l'art, formant un pack-batterie.
[Fig 6] la figure 6 est une vue schématique en coupe longitudinale d'un pack-batterie à trois modules empilés selon l'invention.
[Fig 7] la figure 7 est une vue en coupe longitudinale d'un module de pack-batterie selon l'invention.
[Fig 8A], [Fig 8B] les figures 8A et 8B illustrent en vue de coupe longitudinale les variantes de forme bombée d'un fond de carter d'un module de pack-batterie selon l'invention.
[Fig 9] la figure 9 est une vue en perspective d'un pack-batterie à cinq modules empilés selon l'invention.
[Fig 10] la figure 10 est une vue en coupe longitudinale de la figure 9.
[Fig 11] la figure 11 est une vue en coupe transversale de la figure 9 réalisée au niveau d'un module montrant la connexion électrique entre des bornes de sortie des accumulateurs.
[Fig 12] la figure 12 est une vue en perspective partielle de la figure 9 au niveau d'un module montrant la connexion électrique entre les bornes de sortie des accumulateurs à l'opposé de celles de la figure 11.
[Fig 13] la figure 13 est une vue en perspective partielle d'un pack-batterie selon la figure 9 montrant l'intérieur d'un module, i.e. sans son carter.
[Fig 14] la figure 14 est similaire à la figure 13 en montrant la connexion électrique entre les accumulateurs de deux modules adjacents.
[Fig 15] la figure 15 est une vue en perspective d'un collier de serrage pour l'assemblage mécanique entre deux modules adjacents d'un pack-batterie selon l'invention.
[Fig 16A], [Fig 16B] les figures 16A et 16B sont des vues en perspective de dessous et de dessus d'un support d'accumulateurs au sein d'un module de pack-batterie selon l'invention.
[Fig 17] la figure 17 est une vue en perspective partielle d'un pack-batterie selon une variante de réalisation à l'intérieur d'un module.
[Fig 18] la figure 18 est une vue en perspective et coupe longitudinale de carters de modules d'un pack-batterie illustrant les possibilité d'intégration ou de solidarisation des parois intermédiaires entre modules.

### Description détaillée

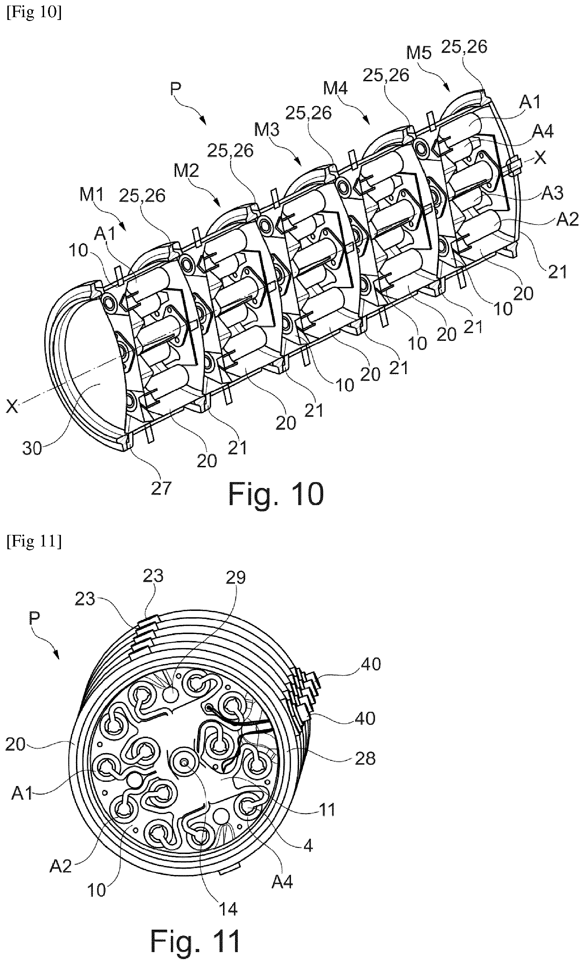

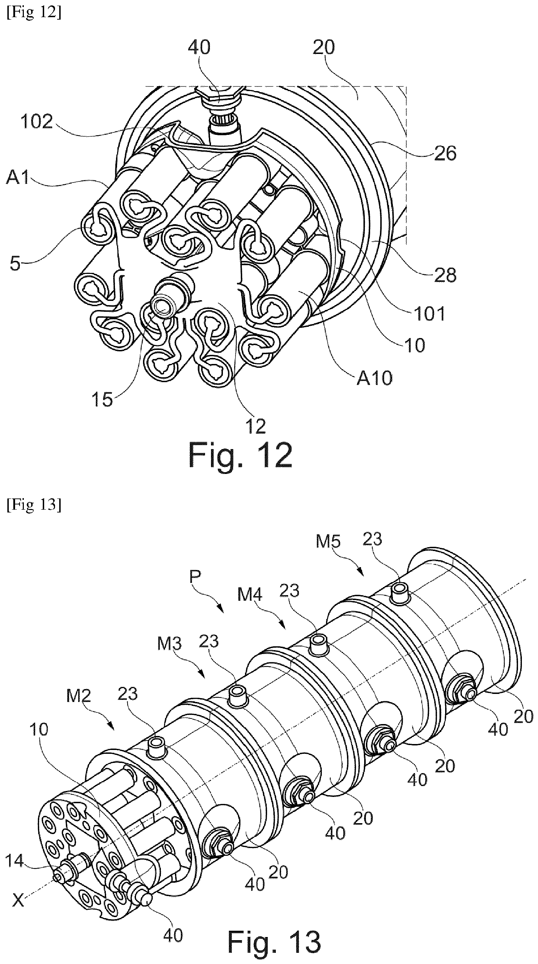

Par souci de clarté, les mêmes références désignant les mêmes éléments d'un accumulateur selon l'état de l'art et d'un accumulateur selon l'invention sont utilisées pour toutes les figures 1 à 18.

On précise que les différents éléments selon l'invention sont représentés uniquement par souci de clarté et qu'ils ne sont pas à l'échelle.

Les figures 1 à 5 ont déjà été commentées en préambule. Elles ne seront donc pas détaillées ci-après.

On a représenté à la figure 6, un exemple de pack-batterie (P) selon l'invention.

Ce pack P comprend une pluralité de modules, au nombre de trois dans cet exemple, M1, M2, M3, de préférence identiques.

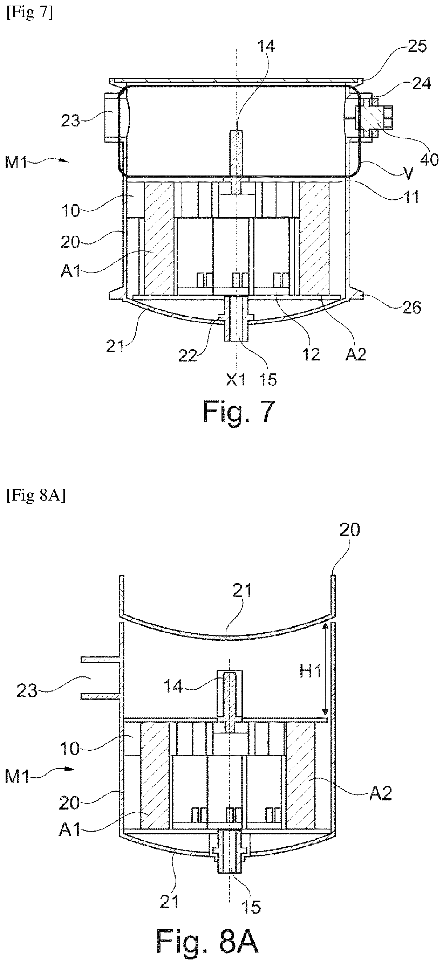

Comme illustré en figure 7, chaque module comprend une pluralité d'accumulateurs A1, A2.. de format cylindrique, maintenus dans un support 10 et reliés électriquement en série et/ou en parallèle par leurs bornes de sortie 4, 5 au moyen de pistes de connexion électrique formant des busbars 11, 12.

Chaque module comprend également des connecteurs électriques complémentaires 14, 15 reliés électriquement respectivement à la borne de sortie positive 4 et à la borne positive 5 des accumulateurs A1, A2...Comme illustré, les connecteurs 14, 15 peuvent consister en des fiches mâle et femelle, notamment des fiches de type banane.

Le support 10 et les accumulateurs maintenus dans le support 10 sont logés dans une enveloppe formant un carter 20.

Le carter 20 de chaque module est en polymère isolant électrique, qui peut être choisi parmi le polyétheréthercétone cétone (PEKK), le polyétheréthercétone (PEEK), le polyfluorure de vinylidène (PVDF), le polysulfure de phénylène (PPS), le polyamide 11 (PA11), le polyamide 12 (PA12) le polyétherimide (PEI), également appelé ULTEM, le Polyphénylsulfone (PPSU), le polysulfone (PSU), le polyéthersulfone (PES).

Le connecteur électrique 15 est monté directement en traversée électrique à travers la paroi d'extrémité longitudinale 21 du carter 20 qui constitue son fond.

Selon l'invention, les modules M1, M2, M3 sont empilés les uns sur les autres en étant assemblés de manière étanche de sorte que deux carters adjacents 20 sont séparés par la paroi d'extrémité longitudinale 21 de l'un d'entre eux.

L'empilement est délimité par la paroi d'extrémité longitudinale 21 d'un carter 20 tandis que l'autre extrémité longitudinale de l'empilement est fermée par un couvercle 30. Autrement dit, les parois intermédiaires 21 entre les carters 20 sont communes, i.e. une seule paroi 21 de séparation est nécessaire entre deux carters adjacentes, sauf pour la dernière extrémité qui est équipée d'un couvercle 30. Cela permet de réduire la masse du pack-batterie.

Par ailleurs, l'empilement des modules est réalisé tel que le connecteur électrique 14 d'un des deux modules adjacents est connecté électriquement au connecteur électrique 15 de l'autre des deux modules adjacents. Cette connexion électrique est réalisée facilement lors de l'empilement entre modules M1, M2, M3...

Comme illustré à la figure 6, le carter 20 est sous la forme générale d'un cylindre borgne 20 à l'exception de plusieurs trous débouchant 22, 23, 24 percés à travers ce cylindre.

Plus précisément, le trou débouchant 22 est celui à travers lequel la traversée électrique avec le connecteur 15 est réalisé.

Le trou débouchant 23 est prévu pour évacuer les gaz en cas de surpression générée au cours de fonctionnement anormal/accidentel, typiquement en cas d'emballement thermique, d'au moins un accumulateur A1, A2 logé dans le carter 20.

Le trou débouchant 24 loge un connecteur électrique 40 relié électriquement à l'(aux) accumulateur(s) logé(s) dans le carter et à relier électriquement à un système de management de batterie (BMS).

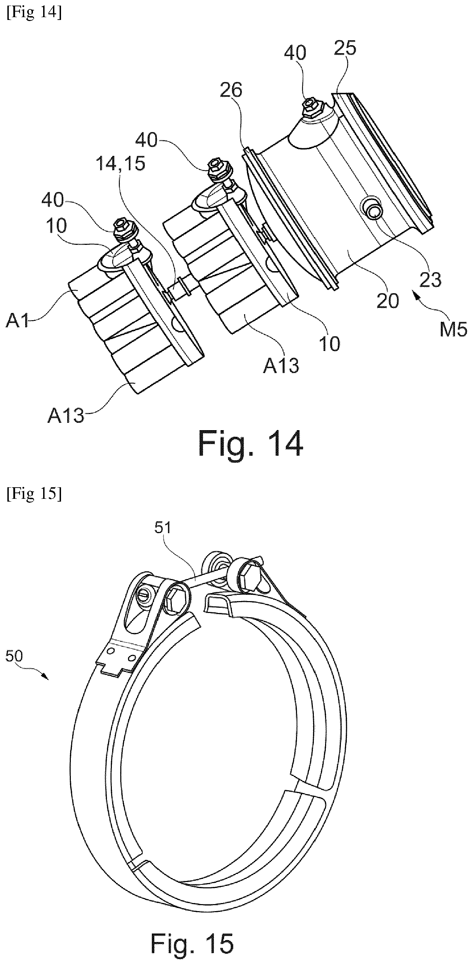

Chaque carter 20 comprend, à chacune de ses extrémités longitudinales, un flasque de serrage 25, 26 pour permettre l'assemblage mécanique avec des carters 20 de modules adjacents au moyen d'un collier de serrage 50. Un tel collier de serrage 50, qui peut être standard comme celui illustré à la figure 15 est rapporté et fixé autour des flasques de serrage 25, 26 de deux carters adjacents ou du carter d'extrémité du module et du couvercle. Pour garantir l'étanchéité entre deux modules adjacents, un joint périphérique 28 peut être agencé au niveau des flasques de serrage 25, 26. Bien que le collier soit privilégié, d'autres systèmes d'assemblage mécanique peuvent être prévus, assurant la solidarisation et optionnellement la mise en compression étanche des carters adjacents. Ex. loquets à bascule

Des carters 20 sous la forme de cylindres borgnes permettent d'obtenir un pack-batterie compact, avec une facilité à empiler.

Les connecteurs électriques 14, 15 s'étendent selon l'axe central X1 de chaque module et les accumulateurs A1, A2... s'étendent parallèlement à cet axe central X1. Cela permet de faciliter les connexions électriques puisque réalisées axialement et une possible orientation à volonté des modules.

Le dimensionnement des carters 20 et le positionnement des supports 10 en leur sein laisse un volume libre V dans lequel le dégazage des accumulateurs peut s'effectuer.

Telle qu'illustré à la figure 6, les fonds 21 des carters sont de forme bombée.

En effet, soumis à une forte pression, une déformation d'une forme plate peut être importante. Cette déformation est le plus importante au centre de la face, là où se fait la connexion électrique par les connecteurs électriques 14, 15. Aussi, en cas de forte poussée de pression, en cas d'emballement thermique d'un des accumulateurs, il y a un risque de déplacer le point de connexion électrique et d'ouvrir le contact électrique entre les connecteurs électriques 14, 15. Le pack-électrique alors sous tension électrique, cela peut créer un arc électrique. Or, la forte déformation se produit au moment où l'atmosphère à l'intérieur des carters 20 des modules peut être plus facilement inflammable. Il faut donc éviter toute déconnexion électrique non souhaitée pour éviter un départ de feu qui serait lié à la présence d'un arc électrique induit par la déconnexion, dans une atmosphère inflammable.

Les connecteurs électriques 14, 15 mis en oeuvre, notamment des fiches mâle/femelle de type banane, sont choisies avantageusement pour tolérer un glissement axial de quelques millimètres, typiquement de 2 à 7 mm.

Aussi pour être certains de ne pas aller au-delà de glissement axial toléré, ce qui provoquerait une déconnexion électrique et par-là un potentiel arc électrique, les inventeurs ont pensé, à réaliser des carters 20 avec des fonds 21 non pas de forme plate, mais préformées, de forme bombées, qui intègrent déjà naturellement une pré-déformation en quelque sorte d'un côté de la forme bombée et d'un arc-boutement de l'autre côté de la forme bombée.

Les inventeurs ont simulé d'autres formes (plates, nervurées ...) mais c'est la forme bombée qui utilise la plus petite masse de matière constituant un carter 20, pour un même critère de 3mm de déformation sous 20 bars de pression utilisée pour le dimensionnement d'un carter 20 et donc de son fond 21.

La combinaison de cette forme bombée de paroi intermédiaire, ainsi que la subdivision du pack-batterie en plusieurs modules ayant chacun leur enveloppe de protection mécanique et thermique améliore la sécurité générale du pack sans nuire à sa masse. Un plus petit nombre d'accumulateurs contenus dans chaque enveloppe réduit en effet les contraintes mécaniques et thermiques à gérer par chaque enveloppe.

La figure 7 montre un tel fond bombé 21, sous la forme d'une portion hémisphérique.

Cette forme bombée peut être orientée en étant convexe ou concave, avec des résultats très similaires de déformation.

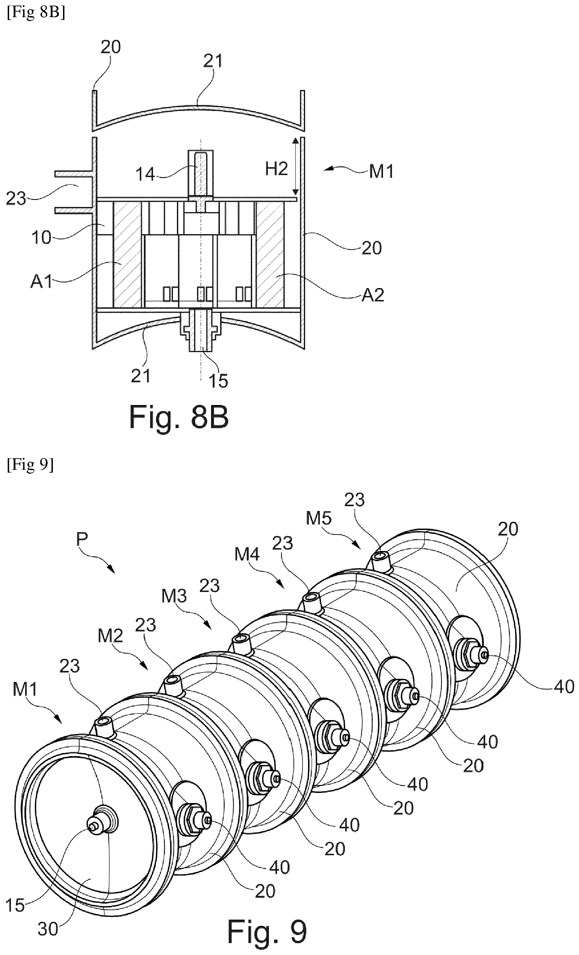

Les figures 8A et 8B illustrent ces deux orientations différentes de la forme bombée.

La forme convexe, c'est-à-dire bombée vers l'extérieur du carter 20, présente un avantage supplémentaire. Elle confère une hauteur H1 qui est plus grande que la hauteur H2 de la forme concave. Cette plus grande hauteur H1 donne ainsi plus de souplesse de positionnement du trou débouchant 23 et de sa forme autour qui permet de connecter un tuyau de collecte de gaz.

Les figures 9 à 14 illustrent un pack-batterie à cinq modules identiques M1 à M5, à carter cylindrique 20 avec un fond hémisphérique convexe 21, qui sont empilés les uns sur les autres, avec un couvercle 30 qui ferme le carter 20 du module M1 d'extrémité longitudinale. Chaque module loge un nombre de treize accumulateurs Li-ion de format cylindrique A1,...A13 qui sont maintenus parallèlement à l'axe longitudinal X du pack.

La figure 15 est un exemple de collier métallique 50 qui permet d'assurer le maintien mécanique entre deux formes cylindriques de carters 20 au moyen d'un serrage sur des collerettes d'appui 25, 26. Un tel collier 50 est usuellement en acier inoxydable, mais il peut aussi être dans d'autres matériaux, métalliques ou non. Dans l'exemple illustré, le serrage entre deux carters adjacents 20 à maintenir se fait par exemple au moyen d'une vis 51 qui resserre au fur et à mesure de son vissage, les deux extrémités de la boucle formée par le collier, réduisant ainsi la longueur du périmètre serré. D'autres serrages sont possibles, comme par exemple le serrage au moyen d'un levier mécanique se servant du principe de la grenouillère mécanique, appelée sauterelle, qui démultiplie la force de fermeture et se positionne en position fermée.

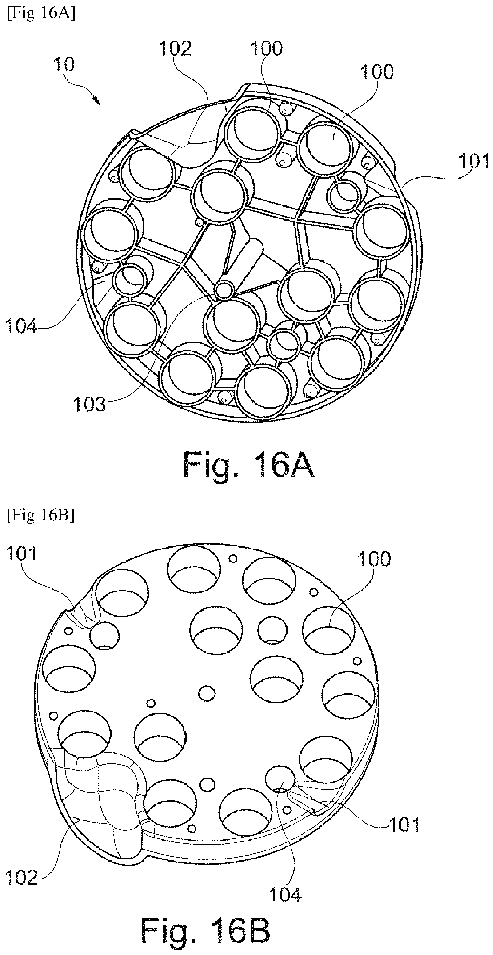

Les figures 16A et 16B montrent en détail d'un exemple de support 10 dans lequel sont maintenus les accumulateurs Li-ion de format cylindrique A1,...A13. Ce support 10 sous la forme générale d'un disque percé de plusieurs trous débouchant 100 dans chacun desquels vient se loger un des accumulateurs. Il comprend également un dégagement périphérique 101 qui vient en regard du trou de dégazage 23 et un dégagement périphérique 102 qui permet d'aider le positionnement d'un connecteur électrique 40 à relier au BMS. Le disque est prolongé d'une tige 103 qui sert à positionner et maintenir le connecteur électrique 15. Enfin, pour alléger le support 10 et aussi faciliter la circulation des gaz, plusieurs trous débouchant 104 peuvent être prévus.

Le matériau du support peut être en métal mais isolé électriquement. Il peut aussi être réalisé dans le même matériau que celui des carters. Il peut donc s'agir d'un polymère isolant électrique choisi parmi le polyétheréthercétone cétone (PEKK), le polyétheréthercétone (PEEK), le polyfluorure de vinylidène (PVDF), le polysulfure de phénylène (PPS), le polyamide 11 (PA11), le polyamide 12 (PA12), le polyétherimide (PEI), également appelé ULTEM,. le polyphénylsulfone (PPSU), le polysulfone (PSU), le polyéthersulfone (PES).

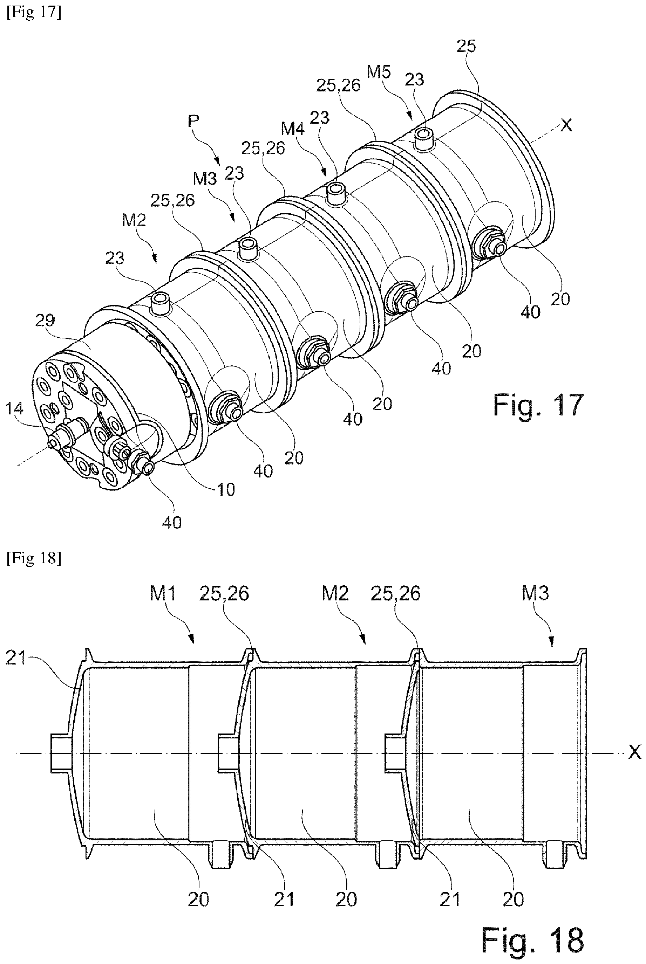

Une variante avantageuse pour la réalisation des modules peut consister à remplir le volume entre les accumulateurs au sein de chacun des modules d'un isolant thermique, de préférence sous la forme d'une mousse 29 comme montré à la figure 17. Un tel isolant 29 permet d'interrompre à tout le moins limiter le flux thermique qui se dégage des accumulateurs, notamment en cas de fonctionnement anormal.

La figure 18 montre les deux possibilités pour réaliser un carter 20 : la paroi 21 formant le fond du carter 20 peut être réalisée intégralement avec le cylindre du carter 20 comme pour les modules M1, M2 sur cette figure ou rapporté entre les modules M2 et M3 de cette figure 18.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si dans l'ensemble des exemples illustrés, le pack-batteries comprend trois ou cinq modules en série électrique, logeant chacun treize accumulateurs en parallèle électrique, le nombre de modules et/ou d'accumulateurs ainsi que la mise en série ou parallèle électriques peuvent être modifiés selon les besoins.

Si dans l'ensemble des exemples illustrés, les enveloppes des modules d'accumulateurs qui forment des carters conformes à l'invention et le couvercle sont électriquement isolants, l'invention s'applique bien entendu à des carters et couvercle électriquement conducteurs.

Si dans l'ensemble des exemples illustrés, les accumulateurs sont de forme cylindrique, l'invention s'applique à tous formats d'accumulateurs, en particulier à des formats prismatiques.

Si dans l'ensemble des exemples illustrés, les emballages des accumulateurs conformes à l'invention sont des emballages rigides (boitiers), l'invention s'applique bien entendu à tous les accumulateurs à emballage souple qui viendraient se loger à l'unité ou par groupe dans une enveloppe étanche formant un carter d'un module du pack-batterie selon l'invention.

Si dans l'ensemble des exemples illustrés, les boitiers des accumulateurs conformes à l'invention sont électriquement conducteurs, l'invention s'applique bien entendu à tous les accumulateurs à tous les boitiers électriquement isolants.

En outre, si dans l'ensemble des exemples illustrés, les bornes de sortie des accumulateurs conformes à l'invention ont une forme générale cylindrique, l'invention s'applique bien entendu à toutes les formes géométriques de bornes (section carrée ou rectangulaire, hexagonale...).

### Références citées :

[1] : Xuning Fenga, et al. « Key Characteristics for Thermal Runaway of Li-ion Batteries » Energy Procedia, 158 (2019) 4684-4689.

## Revendications

1. Pack-batterie (P) comprenant une pluralité de modules (M1,...Mx) comprenant chacun au moins un accumulateur électrochimique (A1-An), au moins un support de maintien de(s) l'accumulateur, une enveloppe formant un carter dans lequel est logé le support et le(s) accumulateur(s) maintenu(s) dans le support, au moins un premier connecteur électrique et au moins un deuxième connecteur électrique complémentaire au premier connecteur, les premier et deuxième connecteurs électriques étant reliés électriquement respectivement à une borne de sortie d'une polarité de l'(des) accumulateur(s) et à la borne de sortie de l'autre polarité de l'(des) accumulateur(s), le premier connecteur électrique étant monté en traversée électrique à travers une paroi d'extrémité longitudinale du carter qui est de forme bombée, munie ou non de nervures de rigidification;
pack-batterie dans lequel les carters des modules sont empilés les uns sur les autres en étant assemblés de sorte que deux carters adjacents sont séparés uniquement par la paroi d'extrémité longitudinale de l'un d'entre eux dans laquelle la traversée électrique est montée, que l'une des extrémités longitudinales de l'empilement soit délimitée par la paroi d'un carter à travers de laquelle la traversée électrique est montée tandis que l'autre extrémité longitudinale de l'empilement est fermée par un couvercle, et que le(s) accumulateur(s) de deux modules adjacents soient reliés électriquement par le premier connecteur électrique d'un deux modules adjacents connecté électriquement au deuxième connecteur électrique de l'autre des deux modules adjacents.

2. Pack-batterie (P) selon la revendication 1, chaque module comprenant une pluralité d'accumulateurs, de préférence de format cylindrique, maintenus dans le support en s'étendant parallèlement à l'axe longitudinal (X) de l'empilement et reliés électriquement en série et/ou en parallèle par leurs bornes de sortie au moyen de pistes de connexion électrique formant des busbars.

3. Pack-batterie (P) selon la revendication 1 ou 2, le carter de chaque module ainsi que le couvercle étant en polymère isolant électrique, le premier connecteur électrique étant monté directement dans la paroi d'extrémité longitudinale du carter.

4. Pack-batterie (P) selon la revendication 3, le polymère isolant électrique étant choisi parmi le polyétheréthercétone cétone (PEKK), le polyétheréthercétone (PEEK), le polyfluorure de vinylidène (PVDF), le polysulfure de phénylène (PPS), le polyamide 11 (PA11), le polyamide 12 (PA12), le polyétherimide (PEI), également appelé ULTEM, le polyphénylsulfone (PPSU), le polysulfone (PSU), le polyéthersulfone (PES).

5. Pack-batterie (P) selon l'une des revendications précédentes, le carter de chaque module étant sous la forme générale d'un cylindre borgne à l'exception du fond percé d'au moins un trou débouchant dans lequel la traversée électrique est réalisée.

6. Pack-batterie (P) selon la revendication 5, le trou débouchant pour la traversée électrique étant réalisé selon l'axe central du cylindre qui constitue l'axe longitudinal d'empilement.

7. Pack-batterie (P) selon l'une des revendications précédentes, les carters des modules étant assemblés de manière étanche entre eux.

8. Pack-batterie (P) selon la revendication 7, la forme de la paroi d'extrémité longitudinale de chacun des carters étant bombée vers l'extérieur du carter qui l'intègre ou auquel elle est solidarisée.

9. Pack-batterie (P) selon la revendication 6 en combinaison avec l'une des revendications 7 ou 8, le fond du carter étant une portion hémisphérique concave ou convexe.

10. Pack-batterie (P) selon l'une des revendications précédentes, chaque carter de module comprenant, à chacune de ses extrémités longitudinales, un flasque de serrage, un collier de serrage, en tant que moyen d'assemblage mécanique, étant rapporté et fixé autour des flasques de serrage de deux carters adjacents ou du carter d'extrémité et du couvercle.

11. Pack-batterie (P) selon l'une des revendications précédentes, les premier et deuxième connecteur électriques étant configurés pour autoriser un déplacement axial, de préférence entre 2 et 7mm, entre les modules sans déconnexion électrique.

12. Pack-batterie (P) selon la revendication 11, les premier et deuxième connecteur électriques étant de type fiche mâle/femelle, appelé « banane », de préférence à multi-contacts périphériques.

13. Pack-batterie (P) selon l'une des revendications précédentes, chaque carter de module étant percé d'un ou plusieurs trous débouchant adapté(s) pour évacuer les gaz en cas de surpression générée au cours de fonctionnement anormal/accidentel, typiquement en cas d'emballement thermique, d'au moins un accumulateur logé dans ledit carter.

14. Pack-batterie (P) selon l'une des revendications précédentes, chaque carter de module étant percé d'un trou débouchant adapté pour loger un connecteur électrique relié électriquement à l'(aux) accumulateur(s) logé(s) dans le carter et à relier électriquement à un système de management de batterie (BMS).

15. Pack-batterie (P) selon l'une des revendications précédentes, au moins une partie du volume entre les accumulateurs au sein de chacun des modules étant remplie d'un isolant thermique, de préférence sous la forme d'une mousse.

16. Pack-batterie (P) selon l'une des revendications précédentes, chaque accumulateur comprenant en tant qu'emballage un boitier (6) ou un emballage souple.

17. Procédé de réalisation d'un pack-batterie (P) comprenant les étapes suivantes :
a/ fourniture d'une pluralité de modules (M1,...Mx) comprenant chacun au moins un accumulateur électrochimique (A1-An), au moins un support de maintien de(s) l'accumulateur, une enveloppe formant un carter dans lequel est logé le support et le(s) accumulateur(s) maintenu(s) dans le support, au moins un premier connecteur électrique et au moins un deuxième connecteur électrique complémentaire au premier connecteur, les premier et deuxième connecteurs électriques étant reliés électriquement respectivement à une borne de sortie d'une polarité de l'(des) accumulateur(s) et à la borne de sortie de l'autre polarité de l'(des) accumulateur(s), le premier connecteur électrique étant monté en traversée électrique à travers une paroi d'extrémité longitudinale du carter ;
b/ empilement des carters des modules les uns sur les autres de sorte que deux carters adjacents sont séparés uniquement par la paroi d'extrémité longitudinale de l'un d'entre eux dans laquelle la traversée électrique est montée, que l'une des extrémités longitudinales de l'empilement soit délimitée par la paroi d'un carter à travers de laquelle la traversée électrique est montée, et que le(s) accumulateur(s) de deux modules adjacents soient reliés électriquement par le premier connecteur électrique d'un deux modules adjacents connecté électriquement au deuxième connecteur électrique de l'autre des deux modules adjacents ;
c/ fermeture de l'autre extrémité longitudinale de l'empilement par un couvercle ;
d/ assemblage mécanique des carters des modules empilés entre eux et avec le couvercle.
